# FASCICULE DE BREVET EUROPEEN

(11) **EP 2 060 006 B1**
(45) Date de publication et mention de la délivrance du brevet: **08.02.2017**
(21) Numéro de dépôt: 07823481.2
(22) Date de dépôt: 06.09.2007
(51) Int. Cl.: H04B 1/00, H03M 1/12, H03M 1/66

(54) **PROCEDE ET EQUIPEMENT POUR LA TRANSMISSION D'UN SIGNAL PAR FILTRAGE DANS UNE BANDE MIROIR**
VERFAHREN UND AUSRÜSTUNG ZUR SIGNALÜBERTRAGUNG MITTELS FILTERUNG IN EINEM SPIEGELBAND
METHOD AND EQUIPMENT FOR TRANSMITTING A SIGNAL BY FILTERING IN A MIRROR BAND

(30) Priorité: 06.09.2006 FR 0607808
(43) Date de publication de la demande: 20.05.2009
(73) Titulaire: MStar Semiconductor, Inc., Taiwan 302 (TW)
(72) Inventeur: MILLERET, Hervé, F-92340 Bourg la Reine (FR); CHEVREAU, Etienne, R-92340 Bourg la Reine (FR)
(74) Mandataire: Novagraaf Technologies
(86) Numéro de dépôt international: PCT/FR2007/001442
(87) Numéro de publication internationale: WO 2008/029028

(56) Documents cités:
- WO-A-00/65722

## Description

L'invention concerne un procédé de traitement d'un signal numérique ou analogique, et un dispositif assurant la mise en oeuvre du procédé.

A l'origine de la présente invention, on s'est intéressé au problème visant à augmenter le débit de transmission de données via des moyens de communication, ou médiums, à disposition d'un particulier, autrement dit via des fils électriques utilisés pour la distribution d'énergie, des câbles coaxiaux utilisés pour la diffusion de programmes de télévision, un réseau hertzien utilisé notamment dans la technologie WIFI et des paires torsadées utilisées pour la téléphonie fixe.

Les besoins en communications numériques ne cessent d'augmenter pour répondre aux attentes de l'utilisateur : réseaux informatiques, jeux vidéos, connexions distantes entre des appareils multimédias. De nombreux services, tels que la voix Protocol Internet (voix sur IP), l'accès à Internet ou la vidéo à la demande requièrent de plus en plus de débit.

Ces besoins se font sentir aussi bien au niveau d'un fournisseur de services tels que ceux évoqués ci-dessus, qu'au niveau d'un utilisateur de ces services.

Au niveau du fournisseur de service, il est toujours possible de faire appel à des moyens de communication permettant de très hauts débits, tels que par exemple les fibres optiques.

Au niveau de l'utilisateur, il est difficile de remplacer les médiums déjà installés.

Il a été constaté que, sur tous les médiums, certaines bandes de fréquences restent disponibles pour de nouvelles applications. Par exemple, sur le câble coaxial, les diffusions de programmes de télévision n'utilisent que des fréquences à partir de 65 MHz ou même de 80 MHz selon les régions. Les fréquences basses sont donc libres.

La présente invention se propose donc d'utiliser les larges plages de fréquences disponibles sur les médiums cités ci avant pour répondre au besoin d'augmenter les débits de transfert de données.

Il existe des procédés pour transmettre un signal analogique dans une bande de fréquences prédéterminée à partir d'un signal numérique initial échantillonné à une fréquence d'échantillonnage, ledit procédé comprenant des étapes de :
- réception du signal numérique initial, ledit signal numérique initial ayant un spectre initial dans une bande de fréquences initiale,
- conversion du signal numérique initial en signal analogique initial,
- modification du signal analogique initial de sorte à générer un signal analogique modifié ayant un spectre modifié dans ladite bande de fréquences prédéterminée,
- transmission du signal analogique modifié dans la bande de fréquences prédéterminée.

Ainsi, il existe déjà des procédés qui assurent le déplacement des données d'une bande initiale de fréquences à une bande de fréquences non utilisée.

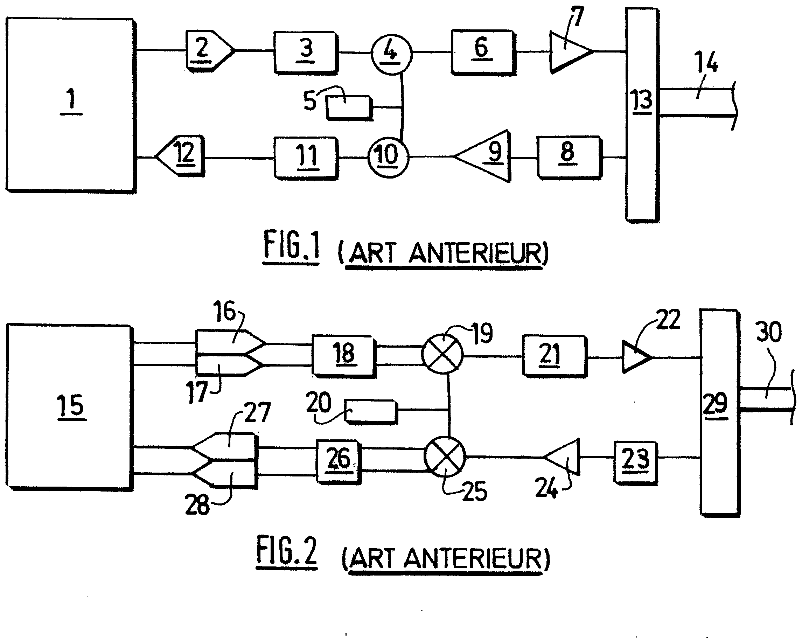

Par exemple, il existe un procédé mettant en oeuvre une architecture représentée sur la figure 1.

Cette architecture fait intervenir un modem bande de base et des mélangeurs.

Classiquement, les solutions de communications numériques utilisent un modem de bande de base capable de traiter des bandes de fréquences larges de plusieurs dizaines de Mégahertz, typiquement jusqu'à trente Mégahertz. Ces modems appelés « modem large bande » utilisent de plus en plus les techniques OFDM (Orthogonal Frequency Division Multiplexing).

Pour émettre un signal, la technique OFDM divise une plage de fréquences en plusieurs sous canaux espacés de bandes libres de tailles fixes. Par la suite, on applique un algorithme (transformée de Fourrier rapide) pour véhiculer le signal par le biais des différents sous canaux. On applique l'algorithme inverse pour recomposer le signal chez le récepteur.

Comme on peut le voir sur la figure 1, la chaîne d'émission d'une telle architecture est composée d'un modem 1, d'un convertisseur numérique vers analogique 2 (CNA), d'un élément de filtrage 3, d'un mélangeur 4 associé à une oscillateur local 5 représentant la fréquence porteuse, d'un élément de filtrage 6 et d'un étage d'amplification 7.

Dans ce procédé de transmission, la modification du spectre du signal à transmettre est donc réalisée par un mélangeur.

Quant à la chaîne de réception, elle est composée d'un bloc de filtrage 8 du signal arrivant, d'un étage d'amplification 9, d'un mélangeur 10 associé à l'oscillateur local 5, d'un élément de filtrage 11 et d'un convertisseur analogique vers numérique 12 (CAN) relié au modem 1.

Un élément de couplage 13 permet le passage du signal dans le médium 14.

La façon dont le signal est modifié par l'architecture précédemment décrite présente toutefois des inconvénients.

En effet, en émission, la fonction du mélangeur n'étant pas sélective, les produits de mélange résultants (signaux non désirés) sont susceptibles de perturber la sensibilité de l'équipement ou de perturber les autres appareils connectés au médium. D'ailleurs, c'est une des raisons pour laquelle on prévoit un filtrage après le mélangeur, ce filtrage pouvant être très sélectif au regard du degré de pollution du signal.

Parallèlement, en mode réception, il est nécessaire d'utiliser un filtrage après le mélangeur pour éliminer tout signal en dehors de la bande pouvant perturber la réception.

De plus, afin de ne pas dégrader de façon significative la sensibilité de réception du modem, il est nécessaire de mettre en oeuvre un mélangeur présentant un faible facteur de bruit, c'est-à-dire qui génère peu de bruit blanc, pour que le mélangeur ne génère pas trop de perturbation sur le signal reçu ou émis.

Enfin, les oscillateurs locaux n'étant pas parfaits, ils créent des imperfections (CFO : Carrier Frequency Offset) de transmission entre un émetteur et un récepteur. Ces dernières sont particulièrement gênantes pour les modulations du type OFDM évoqué ci-dessus et doivent être corrigées dans le traitement du signal numérique ou analogique. Un algorithme spécifique pour traiter ces imperfections est alors nécessairement appliqué.

La figure 2 montre une autre architecture permettant de déplacer les bandes de fréquences vers les plages de fréquences disponibles du réseau.

Il s'agit d'une architecture mise en oeuvre dans le traitement des signaux dit « complexes », qui présentent deux composantes I (« In phase ») et Q (« Quadrature »).

Cette architecture comporte, de manière en soi classique, un modem 15.

En mode émission, l'architecture comporte deux convertisseurs numériques vers analogique 16 et 17 pour chacune des composantes du signal complexe.

Elle comporte également un élément de filtrage 18, un modulateur 19 associé à un oscillateur local 20 représentant la fréquence porteuse, un élément de filtrage 21 et d'un étage d'amplification 22.

Le modulateur 19 transforme le signal complexe à deux composantes en un signal réel. Il comporte une entrée pour un signal appelé oscillateur local (OL). Ce dernier signal est la fréquence porteuse modulée par le signal complexe.

À l'émission, en disposant des signaux I, Q et OL, il est possible de générer un signal dans la bande de fréquences souhaitée (autour de 45 MHz par exemple).
La chaîne de réception est composée d'un bloc de filtrage 23, d'un amplificateur 24, d'un démodulateur 25, d'un filtre 26 et de deux convertisseurs analogique vers numérique 27 et 28.

Le démodulateur 25 transforme le signal réel en un signal complexe. Il comporte une entrée pour le signal appelé oscillateur local (OL). Le signal réel entrant est démodulé autour de la fréquence OL. Le signal sortant présente deux composantes I et Q.

On prévoit également un élément de couplage 29 pour assurer le passage du signal dans un médium 30.

Une telle architecture présente les inconvénients suivants :
De manière similaire à l'architecture avec mélangeur, le modulateur 19 et le démodulateur 25 génèrent des raies parasites de produits de mélange. Il est nécessaire de filtrer ces séquences parasites qui sont susceptibles de perturber la sensibilité de l'équipement (à la réception de signaux) et de perturber les autres appareils connectés au médium (à l'émission de signaux).

De plus, il est nécessaire de mettre en oeuvre deux convertisseurs numérique vers analogique et deux convertisseurs analogique vers numérique pour traiter ou générer un signal complexe, ce qui nécessite de doubler les filtrages en amont ou en aval des convertisseurs.

Enfin, l'oscillateur local crée des imperfections CFO (Carrier Frequency Offset) de transmission entre un récepteur et un émetteur, les CFO étant particulièrement gênantes, comme il a été précédemment expliqué, pour les modulations du type OFDM. Elles doivent donc être impérativement corrigées par l'application d'un algorithme.

Les méthodes de modification du spectre d'un signal initial dans les procédés de transmission connus de sont donc pas satisfaisantes.

Il est par ailleurs connu que, lors d'une conversion numérique analogique, lorsqu'un signal numérique échantillonné à une fréquence d'échantillonnage d'entrée a un spectre dans une bande de fréquences dont la borne supérieure est inférieure à la moitié de la fréquence d'échantillonnage, le signal analogique de sortie a un spectre comprenant d'une part le spectre du signal d'entrée, et d'autre part une pluralité de bandes de fréquences miroirs, lesdites bandes de fréquences miroirs étant des images de ladite bande de fréquences initiale par rapport à des multiples entiers de la moitié de la fréquence d'échantillonnage. Ce phénomène résulte notamment du théorème d'échantillonnage et de la théorie de Shannon-Nyquist, et peut être dénommé repliement de spectre.

Le document EP-1 569 345 évoque notamment ce phénomène de création de bandes images miroir lors d'une conversion analogique numérique.

Ainsi, dans les architectures décrites précédemment, lors des conversions analogique - numérique, de telles bandes miroirs sont créées. Toutefois, L'homme du métier a toujours eu tendance à considérer que ces fréquences devaient être supprimées, et un filtrage passe bas est le plus souvent réalisé pour retrouver la bande de fréquences initiale dans le signal analogique.

L'obtention d'un signal de bande de fréquences différente de la bande de fréquences initiale nécessite alors par exemple des procédés de modification tels que précédemment décrit.

On connaît également le document WO-A-00/65722 qui décrit un procédé dans lequel un signal numérique initial, ayant un spectre initial dans une bande de fréquences initiale est reçu par un suréchantillonneur. Ce suréchantillonneur génère un premier type de bandes miroirs. Le signal ayant ce premier type de bandes miroirs est alors traité par un processeur appelé Super-Nyquist, et le signal obtenu en sortie de ce Super-Nyquist est transmis à un convertisseur numérique vers analogique, qui génère à son tour un deuxième type de bandes miroirs. Dès lors, en sortie du convertisseur numérique vers analogique, les bandes miroirs sont issues de la combinaison des bandes générées par le suréchantillonneur et par le convertisseur numérique vers analogique. Cette combinaison de bandes miroirs est alors filtrée par un filtre pour extraire une bande particulière, et un mélangeur en sortie permet un mélange de fréquences.

Toutefois, le dispositif décrit dans la publication WO-A-00/65722 a l'inconvénient de nécessiter l'utilisation d'un sur-échantillonneur pour générer des premières bandes miroirs. Ce traitement supplémentaire complexifie le dispositif. En outre, il nécessite l'utilisation d'un mélangeur puisque la bande sélectionnée n'est pas directement exploitable à cause de la combinaison des bandes générées par le suréchantillonneur et des bandes générées par le convertisseur.

En outre, le document susmentionné enseigne l'utilisation d'une sélection numérique d'une fréquence image couplée au suréchantillonneur afin de produire un signal miroir à une fréquence bien déterminée où l'amplitude en sortie du convertisseur sera maximale. Ceci suppose donc que le signal de sortie soit un signal correspondant à une bande étroite, c'est-à-dire que la largeur de bande de ce signal de sortie est très faible devant la fréquence d'échantillonnage du convertisseur. Cette étroitesse des bandes de sortie est également un inconvénient du dispositif décrit dans le document WO-A-00/65722.

Au vu de ce document, un problème résolu par l'invention est donc de permettre une sélection d'une bande de fréquence spécifique tout en simplifiant le dispositif décrit.

Un autre problème résolu est de permettre de générer des signaux dans une bande relativement large.

L'invention a notamment pour but de pallier les inconvénients des procédés précédemment décrits.

Pour ce faire, l'invention concerne un procédé pour la transmission de signal analogique dans une bande de fréquences prédéterminée à partir d'un signal numérique initial échantillonné à une fréquence d'échantillonnage, selon la revendication 1.

Le procédé selon l'invention utilise donc avantageusement les bandes de fréquences miroirs qui sont générées lors d'une conversion analogique numérique pour obtenir la bande de fréquences prédéterminée.

Une telle bande de fréquences prédéterminée est donc atteinte sans utiliser de mélangeur, de suréchantillonneur, ou de modulateur comme dans les procédés complexes précédemment décrits.

La bande de fréquences miroir étant des images de ladite bande de fréquences initiale, les informations transmises via le médium sont identiques ou quasi-identiques à celles qui auraient été transmises si le signal était transmis via la bande de fréquences initiale. De plus, la transmission se fait à une fréquence choisie : il suffit ainsi de mettre en oeuvre un filtre dont la bande passante correspond à l'intervalle de fréquences multiple de Fs/2 auquel on souhaite transmettre le signal.

On sait par ailleurs que les bandes de fréquences miroir ne présenteront pas de recouvrement lorsque la borne supérieure de la bande de fréquences initiale est inférieure à la moitié de la fréquence d'échantillonnage du signal numérique initial.

On note en outre que, par rapport au document susmentionné WO-A-00/65722, l'invention se distingue par le fait que le convertisseur numérique vers analogique reçoit directement le signal numérique initial dans une bande de fréquences initiale. Au contraire, dans le document WO-A-00/65722, le signal numérique reçu par le convertisseur comprend déjà une pluralité de bandes miroirs. Selon l'invention, l'absence de traitement du signal numérique simplifie donc le dispositif pour mettre en oeuvre le procédé. La bande de fréquences initiale peut alors être comprise entre 2 et 30 MHz pour obtenir des bandes miroirs en sortie du convertisseur numérique vers analogique. En outre, le signal comprenant la bande filtrée peut directement être transmise sans nécessiter de mélangeur.

De manière avantageuse, le procédé selon l'invention comporte une étape supplémentaire qui consiste à augmenter la fréquence d'échantillonnage du signal numérique. Selon ce mode de réalisation, un sur-échantillonnage est réalisé en sortie du convertisseur numérique vers analogique et non en entrée de ce convertisseur comme dans le document susmentionné.

L'augmentation de la fréquence d'échantillonnage permet d'obtenir un signal analogique contenant plus d'informations, ce qui améliore la qualité des signaux analogiques.

En outre, le procédé comporte de préférence une étape supplémentaire d'amplification dudit signal analogique modifié.

Ainsi, le signal analogique modifié transmis sera plus facilement capté par un appareil de réception.

Dans le cadre de ce mode de réalisation, il est avantageusement prévu de mettre en oeuvre une étape supplémentaire de filtrage pour supprimer d'éventuels signaux non désirables générés au cours de l'étape d'amplification du signal.

Dans le cadre d'un premier mode de réalisation qui sera décrit et illustré par la suite, il est prévu que la fréquence d'échantillonnage soit de 64 MHz.

Une fréquence d'échantillonnage de 64 MHz permet l'utilisation de la première bande miroir en plus de la bande initiale, puisque le spectre résultant utilise alors des fréquences inférieures à 65 MHz. Ces fréquences sont disponibles sur le câble coaxial, pour une application de diffusion de programmes de télévision dans la région visée.

On prévoit ainsi, de préférence, que la bande de fréquences initiale soit comprise entre 2 et 30 MHz. De la sorte, la condition entre la fréquence d'échantillonnage et la borne supérieure de la bande de fréquences initiale est bien respectée.

Dans le cadre d'un mode de mise en oeuvre avantageux de l'invention, ladite bande de fréquences prédéterminée est comprise entre 34 et 62 MHz. Selon l'invention, cette bande de fréquences correspond à la première bande de fréquences miroir pour une bande de fréquences initiale comprise entre 2 et 30 MHz.

Cette première bande de fréquences miroir a l'avantage d'être de bonne qualité et permet une transmission satisfaisante.

L'invention vise également un procédé de transmission de signal numérique dans une bande de fréquences initiale, selon la revendication 8.

De la sorte, par repliement du spectre lors de la conversion analogique vers numérique, on obtient un signal numérique dans la bande de fréquences initiale.

Ainsi mis en oeuvre, le procédé de réception et de traitement d'un signal analogique image permet, à partir d'un spectre ne contenant qu'une seule bande, et qui plus est une bande miroir, de récupérer un signal numérique sensiblement identique à celui que l'on pourrait obtenir à partir de la bande de base d'un signal analogique.

Dans le cadre d'un mode de réalisation avantageux, on prévoit une étape supplémentaire d'amplification du signal image avant conversion du signal image en signal numérique.

En effet, il peut arriver que le signal analogique réceptionné soit trop faible pour pouvoir être traité. Aussi, l'étape supplémentaire d'amplification du signal permet d'assurer une meilleure qualité de signal numérique converti.

Pour les mêmes raisons d'obtention d'un signal numérique converti de qualité, on prévoit une étape supplémentaire de filtrage après l'étape d'amplification, l'étape supplémentaire de filtrage supprimant tous les signaux non désirés, tels que par exemple les bruits générés par l'amplificateur.

L'invention concerne également un dispositif de transmission de signal analogique dans une bande de fréquences prédéterminée à partir d'un signal numérique initial échantillonné à une fréquence selon la revendication 11.

Dans le cadre d'un mode de réalisation préféré qui sera décrit et illustré par la suite, on prévoit que le convertisseur du signal numérique en signal analogique comprenne un filtre d'interpolation augmentant la fréquence d'échantillonnage du signal numérique pour le convertir en signal analogique.

Les avantages d'un tel filtre d'interpolation ont été présentés ci-avant.

Préférentiellement, le convertisseur du dispositif selon l'invention offre une bande passante analogique d'au moins la fréquence maximum de la bande de fréquences miroir utilisée d'ordre la plus élevée. De cette manière, plusieurs bandes images miroir peuvent être générées par le convertisseur, et le dispositif ainsi réalisé offre un plus grand choix d'intervalles de fréquences libres auxquelles les signaux peuvent être transmis au médium.

Pour les raisons exposées ci-avant dans le cadre du procédé de traitement et d'émission d'un signal selon l'invention, on prévoit que le dispositif comporte avantageusement un amplificateur du signal analogique.

En outre et de préférence, le dispositif comporte dans ce cas un filtre supplémentaire de suppression de signaux non désirés générés par l'amplificateur.

L'invention concerne également un dispositif de transmission de signal numérique dans une bande de fréquences initiale, selon la revendication 16.

On décrira maintenant plusieurs modes de réalisations du dispositif selon l'invention, en faisant référence aux dessins annexés, parmi lesquels :
- la figure 3 est un schéma d'un mode de réalisation d'un dispositif selon l'invention,
- la figure 4a illustre un spectre comprenant une bande de signal numérique avant conversion en signal analogique à transmettre à un médium au moyen du dispositif représenté sur la figure 3,
- la figure 4b montre un spectre comprenant une bande de signal analogique et ses bandes miroir générées par le convertisseur numérique / analogique (CNA) par conversion du signal,
- la figure 5a montre un spectre comprenant une bande de signal analogique et ses bandes miroir transmises via un médium au dispositif selon l'invention,
- la figure 5b représente le spectre de la figure 5a replié par conversion du signal analogique en signal numérique par le convertisseur analogique / numérique (CAN),
- la figure 6 montre le spectre d'une bande de signal analogique et ses bandes images sur lequel on place un filtre de sélection d'une bande image, et plus particulièrement un filtre de sélection de la première bande image générée par la conversion du signal numérique en signal analogique,
- et la figure 7 montre le spectre d'une bande image d'un signal analogique devant être converti en signal numérique, sur lequel un filtre est placé de manière à générer le signal initial la figure 4a par repliement de spectre.

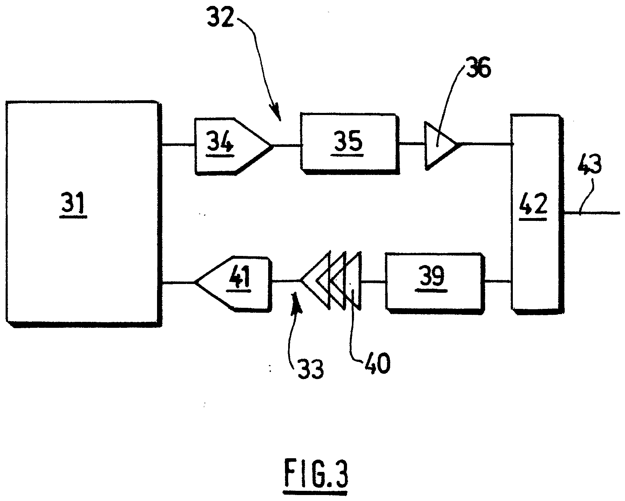

On fera tout d'abord référence à la figure 3 qui illustre schématiquement un arrangement de divers éléments composant un dispositif selon un mode de réalisation conforme à l'invention.

Le dispositif de la figure 3 comporte un modem 31, appelé également circuit bande de base, comportant des interfaces d'alimentation et des moyens de traitement d'un signal numérique transmis par les interfaces.

Le modem 31 est relié à une chaîne d'émission 32 qui comporte des éléments électroniques assurant le traitement du signal en mode émission.

Le modem 31 est également relié à une chaîne de réception 33 comportant des éléments électroniques assurant le traitement du signal en mode réception.

La chaîne d'émission comporte un convertisseur 34 du signal numérique en signal analogique (CNA), un premier filtre 35 et un amplificateur 36 du signal.

Pour simplifier la lecture, le convertisseur de signal numérique en signal analogique sera désigné ci-après par CNA.

Le CNA répond à la loi de Shannon qui précise l'indétermination existante entre les spectres fréquentiels se trouvant de part et d'autre d'un multiple entier de la moitié de la fréquence d'échantillonnage du signal Fs.

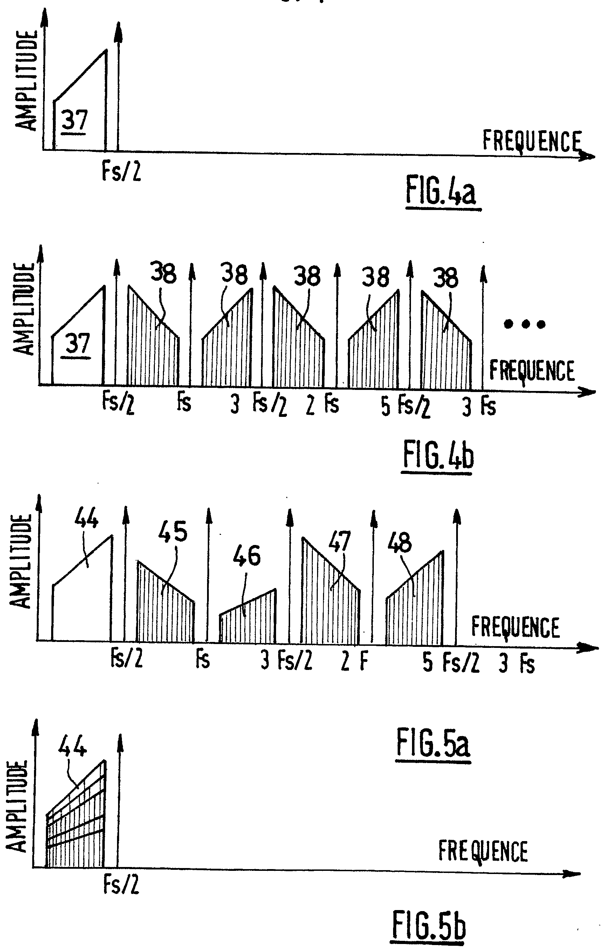

Autrement dit, le spectre analogique de sortie (représenté en figure 4b) est constitué du spectre 37 correspondant aux données numériques d'entrantes (représenté en figure 4a), et de ce même spectre symétrique autour d'un multiple entier de la moitié de la fréquence d'échantillonnage Fs.

On obtient alors en sortie du convertisseur un spectre comportant une bande de base de signal initial 37 correspondant aux données numériques entrantes, et des bandes miroir 38 correspondant aux images du spectre et ses symétries autour du multiple entier de la moitié de la fréquence d'échantillonnage Fs.

Dans le cadre du mode de réalisation présentement décrit, la fréquence d'échantillonnage choisie est de 64 MHz, et la bande de fréquences utile est comprise entre 2 MHz et 30 MHz pour les raisons qui ont été évoquées ci-dessus.

Aussi, les différentes bandes miroir générées par le convertisseur sont présentes autour d'un multiple entier de 32 MHz (64 MHz, 96 MHz, 128 MHz...). Autrement dit, la première bande miroir se trouve dans un intervalle de fréquences comprises entre 32 et 64 MHz, la seconde bande miroir est comprise dans un intervalle de fréquences de 64 à 96 MHz, la quatrième bande miroir se trouve dans un intervalle de fréquences comprises entre 96 et 128 MHz... et ainsi de suite.

Le CNA 34 comprend avantageusement un filtre d'interpolation qui augmente la fréquence d'échantillonnage du signal numérique pour le convertir en signal analogique, de manière à pallier une éventuelle atténuation du spectre. En effet, il s'avère que le spectre comportant les bandes miroir qui sont générées par un CNA est atténué. Aussi, pour mieux utiliser les informations de la bande miroir 38, un filtre d'interpolation est mis en oeuvre avec une fréquence d'échantillonnage qui est supérieure à Fs.

On prévoit également que le convertisseur offre une bande passante analogique d'au moins 80 MHz de sorte à pouvoir traiter des bandes de signaux assez larges ou bien encore de sorte à pouvoir choisir entre la bande de fréquences initiale et la première bande de fréquences miroir.

Le filtre 35 est un filtre passe bande qui permet de sélectionner une seule bande miroir 38 en fonction de l'intervalle de fréquences auquel il a été décidé de transmettre ledit signal.

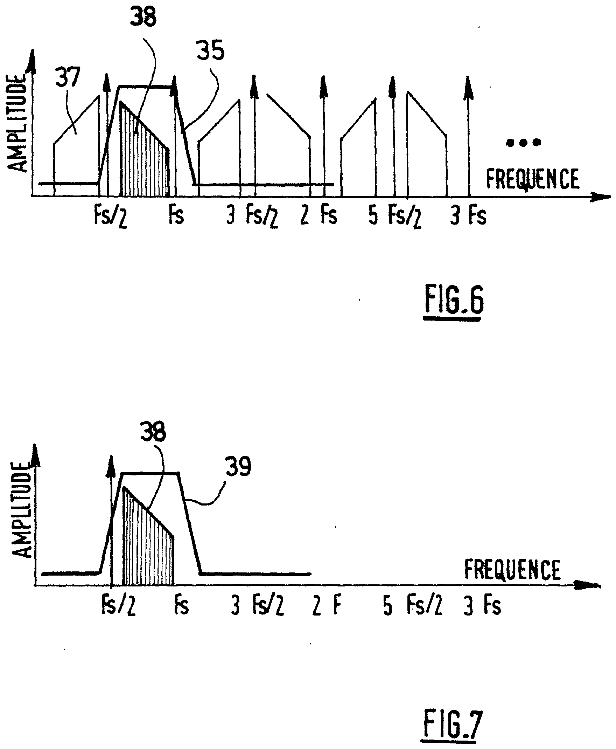

La figure 6 illustre schématiquement la sélection de la première bande miroir 38 par le filtre 35.

Le filtre 35 présente une bande passante dont la largeur est sensiblement identique à celle de la bande miroir 38 prédéterminée, et dont les limites de l'intervalle de fréquences sont sensiblement identiques à celles de la bande miroir 38 prédéterminée.

La chaîne de réception 33 du dispositif illustré sur la figure 3 comporte un second filtre 39 de sélection d'une bande de fréquences prédéterminée, un amplificateur 40 pour amplifier le signal, et un convertisseur du signal analogique en un signal numérique 41 (CAN).

Le convertisseur de signal analogique en signal numérique sera désormais désigné par CAN pour simplifier la lecture.

Les chaînes d'émission 32 et de réception 33 sont assemblées à des moyens de couplage 42 qui sont reliés à un médium 43 de transmission de signaux.

En mode réception, le filtre 39 est également un filtre passe bande. Il est calibré en fonction de l'intervalle de fréquences de la bande miroir contenant les informations de signal à convertir sous format numérique.

Pour ce faire, le filtre 39 présente une bande passante dont la largeur est sensiblement identique à celle de la bande miroir 38 prédéterminée, comme on peut le voir sur la figure 7, et dont les limites de l'intervalle de fréquences sont sensiblement identiques à celles de la bande miroir 38 prédéterminée,

De manière générale, un convertisseur de signal analogique en signal numérique présente initialement un spectre de signaux analogiques qui comporte la bande de signal analogique entrant superposée aux bandes miroirs des spectres analogiques symétriques autour d'un multiple entier de la moitié de la fréquence d'échantillonnage. La figure 5a montre le spectre analogique entrant, comportant une bande de base 44 dont le signal est analogique, et ses bandes miroirs 45, 46, 47 et 48. On a représenté volontairement des bandes miroirs avec des amplitudes différentes de sorte à mieux visualiser la superposition des bandes par le convertisseur, cette superposition étant représentée sur la figure 5b.

Pour que la superposition soit correctement réalisée par le CAN, ce dernier est calibré avec une fréquence d'échantillonnage égale à Fs.

La superposition des bandes miroir sur la bande de base résulte des formules de traitement du signal (appelées également lois de Shannon) qui précisent l'indétermination spectrale autour d'un multiple entier de Fs/2.

Dans le cadre de la présente invention, le spectre de signal analogique entrant dans le CAN 41 ne comporte que la bande miroir 38 représentée sur la figure 7.

Par repliement de spectre, on obtient un spectre de sortie constitué de la bande miroir 38 déplacée à une fréquence inférieure à Fs/2 conformément à la loi de Shannon.

Le signal de la bande miroir 38 a été converti en signal numérique et correspond au signal numérique initial.

On peut prévoir accessoirement un filtre supplémentaire dans la chaîne d'émission, pour supprimer les éventuels signaux non désirés après amplification.

De même, il pourrait être prévu un filtre supplémentaire dans la chaîne de réception, après amplification du signal.

Ces filtres supplémentaires n'ont pas été représentés sur la figure 3 pour en faciliter la lecture. Il est toutefois à noter que ces filtres améliorent la qualité du signal à traiter.

On va maintenant détailler les procédés de traitements des signaux pour les transmettre ou pour les traiter à leur réception.

Le modem 31 (ou circuit bande de base) transmet au CNA 34 un signal numérique, provenant d'un appareil électronique connecté au modem 31 via les interfaces du modem.

Ce signal numérique initial est contenu dans une bande de fréquences (ou bande de base) 37 qui est comprise dans un intervalle de fréquences initial.

Le CNA 34 convertit le signal numérique de la bande de base 37 en signal analogique, et il crée des bandes miroir 38 qui s'étalent sur des intervalles de fréquences différents de l'intervalle fréquences de la bande de base 37. Ces intervalles de fréquences différents sont tous des multiples de la moitié de la fréquence d'échantillonnage conformément à la loi de Shannon.

Le CNA 34 comporte un filtre d'interpolation qui augmente la fréquence d'échantillonnage du signal numérique, de manière à obtenir des bandes images 38 dont le signal analogique est plus précis.

Au moyen du filtre 35, on sélectionne une bande miroir 38 parmi toutes celles qui ont été générées par ledit convertisseur.

La bande de fréquences à laquelle se trouve la bande miroir est la bande de fréquences qui a été préalablement choisie pour transmettre le signal.

De préférence, cette bande de fréquences est différente de celle couramment utilisée, de façon à améliorer le débit global via le médium 43.

Pour réaliser cette sélection, on a choisi un filtre 35 en fonction de sa bande passante.

Dans le cadre du présent exemple, on choisit de transmettre le signal à une fréquence inférieure à 65 MHz, les fréquences supérieures à 65 MHz étant disponibles pour transmettre des signaux relatifs à des programmes de télévision, par exemple.

On obtient alors un spectre ne contenant que la bande image 38 qui s'étale sur un intervalle de fréquences inférieur à 65 MHz et qui comporte un signal image du signal analogique correspondant au signal numérique initial qui fut transmis au CNA 34.

Le signal de la bande miroir 38 est alors amplifié au moyen de l'amplificateur 36, puis le spectre est filtré pour enlever tous les signaux non désirés générés par l'amplificateur.

Le signal image est alors véhiculé via ledit médium 43 jusqu'à un réseau de transmission de signaux, qui le transmettra à un appareil équipé du dispositif selon l'invention apte à assurer le traitement du signal analogique de la bande image.

En mode réception, le spectre provenant du médium est filtré par le filtre 39 de manière à ne sélectionner que l'intervalle de fréquences sur lequel s'étend la bande miroir 38 (figure 7).

Le signal de la bande miroir 38 est alors amplifié au moyen de l'amplificateur 40, et le spectre est éventuellement filtré de nouveau afin d'enlever tous les signaux non désirés générés par l'amplificateur.

De la sorte, seul le signal analogique est alors converti en signal numérique au moyen du CAN.

Par repliement du spectre, on obtient alors un signal numérique correspondant à un signal initial, émis par un appareil électronique, puis transformé et transmis par un dispositif selon l'invention.

Le signal numérique ainsi converti peut alors être transmis à l'appareil électronique relié au modem 31.

## Revendications

1. Procédé pour la transmission de signal analogique dans une bande de fréquences prédéterminée à partir d'un signal numérique initial échantillonné à une fréquence d'échantillonnage, ledit procédé comprenant des étapes dans lesquelles :
- un convertisseur numérique vers analogique convertit le signal numérique initial en un signal analogique initial présentant un spectre comprenant une pluralité de bandes de fréquences miroirs, lesdites bandes de fréquences miroirs étant des images de ladite bande de fréquences initiale par rapport à des multiples entiers de la moitié de la fréquence d'échantillonnage,
- le signal analogique initial est modifié de sorte à générer un signal analogique modifié ayant un spectre modifié dans ladite bande de fréquences prédéterminée,
- le signal analogique modifié dans la bande de fréquences prédéterminée est transmis,
où le signal numérique initial est en bande de base et le procédé comprend une étape préalable dans laquelle le convertisseur numérique vers analogique (34) reçoit le signal numérique initial, ledit signal numérique initial ayant un spectre initial dans une bande de fréquences initiale, et en ce que l'étape dans laquelle le signal analogique initial est modifié comprend une étape de filtrage consistant à filtrer ladite bande de fréquences prédéterminée parmi ladite pluralité de bandes de fréquences miroirs.

2. Procédé selon la revendication 1, **caractérisé en ce qu'**il comporte une étape supplémentaire d'augmentation de la fréquence d'échantillonnage du signal numérique initial.

3. Procédé selon l'une quelconque des revendications précédentes, **caractérisé en ce qu'**il comporte une étape supplémentaire d'amplification du signal analogique modifié.

4. Procédé selon la revendication 3, **caractérisé en ce qu'**il comporte une étape supplémentaire de filtrage pour supprimer des signaux non désirables générés au cours de l'étape d'amplification du signal analogique modifié.

5. Procédé selon l'une quelconque des revendications précédentes, **caractérisé en ce que** ladite fréquence d'échantillonnage (Fs) est de 64 MHz.

6. Procédé selon l'une quelconque des revendications précédentes, **caractérisé en ce que** ladite bande de fréquences initiale (37) est comprise entre 2 et 30 MHz.

7. Procédé selon l'une quelconque des revendications précédentes, **caractérisé en ce que** ladite bande de fréquences prédéterminée est comprise entre 32 et 64 MHz.

8. - Procédé de transmission de signal numérique dans une bande de fréquences initiale, ledit signal numérique étant échantillonné à une fréquence d'échantillonnage à partir d'un signal analogique ayant un spectre de fréquences comprenant au moins une bande de fréquences miroir, ladite bande de fréquences miroir étant une image de ladite bande de fréquences initiale par rapport à au moins un multiple entier de la moitié de ladite fréquence d'échantillonnage, ledit procédé comprenant des étapes consistant à :
- filtrer ledit signal analogique dans une bande de fréquences prédéterminée parmi ladite au moins une bande de fréquences miroir de sorte à générer un signal analogique modifié ayant un spectre dans ladite bande de fréquences prédéterminée ;
- convertir par un convertisseur analogique vers numérique ledit signal analogique modifié en un signal numérique, de sorte à générer ledit signal numérique dans ladite bande de fréquences initiale, où le signal numérique est en bande de base;
- transmettre ledit signal numérique.

9. Procédé selon la revendication 8, **caractérisé en ce qu'**il comporte une étape supplémentaire d'amplification du signal analogique modifié avant conversion du signal analogique modifié en signal numérique.

10. Procédé selon la revendication 9, **caractérisé en ce qu'**il comporte une étape supplémentaire de filtrage après l'étape d'amplification, ladite étape supplémentaire de filtrage supprimant tous les signaux non désirés.

11. Dispositif de transmission de signal analogique dans une bande de fréquences prédéterminée à partir d'un signal numérique initial échantillonné à une fréquence d'échantillonnage, ledit dispositif comprenant :
- des moyens de transmission (31) en bande de base;
- un convertisseur numérique vers analogique (34) ;
- les moyens de transmission étant agencés pour transmettre le signal numérique initial au convertisseur numérique vers analogique, ledit signal numérique initial étant en bande de base et
ayant un spectre initial dans une bande de fréquences initiale,
- le convertisseur numérique vers analogique (34) étant apte à convertir ledit signal numérique initial en un signal analogique initial présentant un spectre comprenant une pluralité de bandes de fréquences miroirs, lesdites bandes de fréquences miroirs étant des images de ladite bande de fréquences initiale par rapport à des multiples entiers de la moitié de la fréquence d'échantillonnage,
- des moyens de modification (35) du signal analogique initial agencés de sorte à générer un signal analogique modifié ayant un spectre modifié dans ladite bande de fréquences prédéterminée,
- des moyens de transmission du signal analogique modifié dans ladite bande de fréquences prédéterminée, où lesdits moyens de modification (35) comprennent un filtre agencé pour sélectionner ladite bande de fréquences prédéterminée parmi ladite pluralité de bandes de fréquences miroirs.

12. Dispositif selon la revendication 11 dans lequel ladite bande de fréquences initiale (37) est comprise entre 2 et 30 MHz.

13. Dispositif selon la revendication 11 ou 12, **caractérisé en ce que** ledit convertisseur du signal numérique en signal analogique (34) comprend un filtre d'interpolation augmentant la fréquence d'échantillonnage du signal numérique pour le convertir en signal analogique.

14. Dispositif selon l'une quelconque des revendications 11 à 13, **caractérisé en ce qu'**il comporte en outre un amplificateur (36) du signal analogique.

15. Dispositif selon la revendication 14, **caractérisé en ce qu'**il comporte un filtre supplémentaire de suppression de signaux non désirés générés par ledit amplificateur.

16. Dispositif de transmission de signal numérique dans une bande de fréquences initiale, ledit signal numérique étant échantillonné à une fréquence d'échantillonnage à partir d'un signal analogique ayant un spectre de fréquences comprenant au moins une bande de fréquences miroir, ladite bande de fréquences miroir étant une image de ladite bande de fréquences initiale par rapport à au moins un multiple entier de la moitié de ladite fréquence d'échantillonnage, ledit dispositif comprenant :
- un filtre (39) agencé pour sélectionner ledit signal analogique dans une bande de fréquences prédéterminée parmi ladite au moins une bande de fréquences miroir de sorte à générer un signal analogique modifié ayant un spectre dans ladite bande de fréquences prédéterminée ;
- un convertisseur analogique vers numérique (41) apte à convertir ledit signal analogique en un signal numérique, de sorte à générer un signal numérique dans ladite bande de fréquences initiale, où le signal numérique est en bande de base;
- des moyens (31) de transmission dudit signal numérique.

17. Dispositif selon la revendication 16, **caractérisé en ce qu'**il comporte en outre un amplificateur (40) du signal analogique modifié.

18. Dispositif selon la revendication 17, **caractérisé en ce qu'**il comporte un filtre supplémentaire de suppression de signaux non désirés générés par ledit amplificateur.

## Patentansprüche

1. Verfahren zur Übertragung eines analogen Signals in einem vorbestimmten Frequenzband ausgehend von einem ursprünglichen digitalen Signal, das mit einer Abtastfrequenz abgetastet wird, wobei das Verfahren Schritte umfasst, bei welchen:
- ein Digital-Analog-Wandler das ursprüngliche digitale Signal in ein ursprüngliches analoges Signal umwandelt, das ein Spektrum aufweist, das eine Vielzahl von Spiegelfrequenzbändern umfasst, wobei die Spiegelfrequenzbänder Bilder des ursprünglichen Frequenzbands in Bezug zu mehrfachen Ganzen der Hälfte der Abtastfrequenz sind,
- das ursprüngliche analoge Signal derart modifiziert wird, dass ein modifiziertes analoges Signal erzeugt wird, das ein modifiziertes Spektrum in dem vorbestimmten Frequenzband hat,
- das modifizierte analoge Signal in dem vorbestimmten Frequenzband übertragen wird,
wobei das ursprüngliche digitale Signal im Basisband ist und das Verfahren einen Vorabschritt umfasst, bei dem der Digital-Analog-Wandler (34) das ursprüngliche digitale Signal empfängt, wobei das ursprüngliche digitale Signal ein ursprüngliches Spektrum in einem ursprünglichen Frequenzband hat, und dass der Schritt, bei dem das ursprüngliche analoge Signal modifiziert wird, einen Schritt des Filterns umfasst, der darin besteht, das vorbestimmte Frequenzband in der Vielzahl von Spiegelfrequenzbändern zu filtern.

2. Verfahren nach Anspruch 1, **dadurch gekennzeichnet, dass** es einen zusätzlichen Schritt des Erhöhens der Abtastfrequenz des ursprünglichen digitalen Signals umfasst.

3. Verfahren nach einem der vorhergehenden Ansprüche, **dadurch gekennzeichnet, dass** es einen zusätzlichen Schritt des Verstärkens des modifizierten analogen Signals umfasst.

4. Verfahren nach Anspruch 3, **dadurch gekennzeichnet, dass** es einen zusätzlichen Schritt des Filterns zum Unterdrücken der nicht wünschenswerten Signale, die im Laufe des Verstärkungsschritts des modifizierten analogen Signals erzeugt werden, umfasst.

5. Verfahren nach einem der vorhergehenden Ansprüche, **dadurch gekennzeichnet, dass** die Abtastfrequenz (Fs) 64 MHz beträgt.

6. Verfahren nach einem der vorhergehenden Ansprüche, **dadurch gekennzeichnet, dass** das ursprüngliche Frequenzband (37) zwischen 2 und 30 MHz liegt.

7. Verfahren nach einem der vorhergehenden Ansprüche, **dadurch gekennzeichnet, dass** das vorbestimmte Frequenzband zwischen 32 und 64 MHz liegt.

8. Verfahren zum Übertragen eines digitalen Signals in einem ursprünglichen Frequenzband, wobei das digitale Signal mit einer Abtastfrequenz ausgehend von einem analogen Signal, das ein Frequenzspektrum hat, das mindestens ein Spiegelfrequenzband umfasst, abgetastet wird, wobei das Spiegelfrequenzband ein Bild des ursprünglichen Frequenzbands in Bezug zu mindestens einem vielfachen Ganzen der Hälfte der Abtastfrequenz ist, wobei das Verfahren Schritte umfasst, die aus Folgendem bestehen:
- Filtern des analogen Signals in einem vorbestimmten Frequenzband aus dem mindestens einen Spiegelfrequenzband, so dass ein modifiziertes analoges Signal, das ein Spektrum in dem vorbestimmten Frequenzband hat, erzeugt wird;
- Umwandeln durch einen Analog-Digital-Wandler des modifizierten analogen Signals in ein digitales Signal, so dass das digitale Signal in dem ursprünglichen Frequenzband, in dem das digitale Signal im Basisband ist, erzeugt wird;
- Übertragen des digitalen Signals.

9. Verfahren nach Anspruch 8, **dadurch gekennzeichnet, dass** es einen zusätzlichen Schritt des Verstärkens des modifizierten analogen Signals vor der Umwandlung des modifizierten analogen Signals in ein digitales Signal umfasst.

10. Verfahren nach Anspruch 9, **dadurch gekennzeichnet, dass** es einen zusätzlichen Filterschritt nach dem Verstärkungsschritt umfasst, wobei der zusätzliche Filterschritt alle nicht erwünschten Signale unterdrückt.

11. Vorrichtung zum Übertragen eines analogen Signals in einem vorbestimmten Frequenzband ausgehend von einem ursprünglichen digitalen Signal, das mit einer Abtastfrequenz abgetastet wird, wobei die Vorrichtung Folgendes umfasst:
- Mittel zum Übertragen (31) im Basisband;
- einen Digital-Analog-Wandler (34);
- wobei die Übertragungsmittel eingerichtet sind, um das ursprüngliche digitale Signal zu dem Digital-Analog-Wandler zu übertragen, wobei das ursprüngliche digitale Signal im Basisband ist und ein ursprüngliches Spektrum in einem ursprünglichen Frequenzband hat,
- wobei der Digital-Analog-Wandler (34) geeignet ist, das ursprüngliche digitale Signal in ein ursprüngliches analoges Signal umzuwandeln, das ein Spektrum aufweist, das eine Vielzahl von Spiegelfrequenzbändern umfasst, wobei die Spiegelfrequenzbänder Bilder des ursprünglichen Frequenzbands in Bezug zu vielfachen Ganzen der Hälfte der Abtastfrequenz sind,
- Mittel zum Ändern (35) des ursprünglichen analogen Signals, die derart eingerichtet sind, dass sie ein modifiziertes analoges Signal erzeugen, das ein modifiziertes Spektrum in dem vorbestimmten Frequenzband hat,
- Mittel zum Übertragen des modifizierten analogen Signals in dem vorbestimmten Frequenzband,
wobei die Modifikationsmittel (35) ein Filter umfassen, das eingerichtet ist, um das vorbestimmte Frequenzband aus der Vielzahl von Spielfrequenzbändern auszuwählen.

12. Vorrichtung nach Anspruch 11, wobei das ursprüngliche Frequenzband (37) zwischen 2 und 30 MHz liegt.

13. Vorrichtung nach Anspruch 11 oder 12, **dadurch gekennzeichnet, dass** der Wandler des digitalen Signals in analoges Signal (34) ein Interpolationsfilter umfasst, das die Abtastfrequenz des digitalen Signals erhöht, um es in ein analoges Signal umzuwandeln.

14. Vorrichtung nach einem der Ansprüche 11 bis 13, **dadurch gekennzeichnet, dass** sie außerdem einen Verstärker (36) des analogen Signals umfasst.

15. Vorrichtung nach Anspruch 14, **dadurch gekennzeichnet, dass** sie ein zusätzliches Filter zum Unterdrücken nicht erwünschter Signale, die von dem Verstärker erzeugt werden, umfasst.

16. Vorrichtung zum Übertragen eines digitalen Signals in einem ursprünglichen Frequenzband, wobei das digitale Signal mit einer Abtastfrequenz ausgehend von einem analogen Signal, das ein Frequenzspektrum hat, das mindestens ein Spiegelfrequenzband umfasst, abgetastet wird, wobei das Spiegelfrequenzband ein Bild des ursprünglichen Frequenzbands in Bezug zu mindestens einem vielfachen Ganzen der Hälfte der Abtastfrequenz ist, wobei die Vorrichtung Folgendes umfasst:
- ein Filter (39), das eingerichtet ist, um das analoge Signal in einem vorbestimmten Frequenzband aus dem mindestens einen Spiegelfrequenzband derart auszuwählen, dass ein modifiziertes analoges Signal erzeugt wird, das ein Spektrum in dem vorbestimmten Frequenzband hat;
- einen Analog-Digital-Wandler (41), der geeignet ist, um das analoge Signal in ein digitales Signal umzuwandeln, so dass ein digitales Signal in dem ursprünglichen Frequenzband erzeugt wird, in dem das digitale Signal im Basisband ist;
- Mittel (31) zum Übertragen des digitalen Signals.

17. Vorrichtung nach Anspruch 16, **dadurch gekennzeichnet, dass** sie außerdem einen Verstärker (40) des modifizierten analogen Signals umfasst.

18. Vorrichtung nach Anspruch 17, **dadurch gekennzeichnet, dass** sie ein zusätzliches Filter zum Unterdrücken nicht erwünschter Signale, die von dem Verstärker erzeugt werden, umfasst.

## Claims

1. Method for transmitting an analogue signal in a predetermined frequency band from an initial digital signal sampled at a sampling frequency, said method comprising steps in which:
- a digital to analogue converter converts the initial digital signal into an initial analogue signal having a spectrum comprisinga plurality of mirrorfrequency bands, said mirrorfrequencybands being images of said initial frequency band with respect to integer multiples of half the sampling frequency,
- the initial analogue signal is modified so as to generate a modified analogue signal having a modified spectrum in said predetermined frequency band,
- the analogue signal modified in the predetermined frequency band is transmitted,
wherein the initial digital signal is baseband and the method comprises a prior step in which the digital to analogue converter receives the initial digital signal, said initial digital signal having an initial spectrum in an initial frequencyband, and the step in which the initial analogue signal is modified comprises a filtering step consisting of filtering said predetermined frequency band among said plurality of mirrorfrequency bands.

2. Method according to claim 1, **characterized in that** it comprises a supplementary step of increasing the sampling frequency of the initial digital signal.

3. Method according to any one of the preceding claims, **characterized in that** it comprises a supplementary step of amplifying the modified analogue signal.

4. Method according to claim 3, characterizing that it comprises a supplementary filtering step for eliminating undesirable signals generated during the step of amplifying the modified analogue signal.

5. Method according to any one of the preceding claims, **characterized in that** said samplingfrequency(Fs) is 64 MHz.

6. Method according to any one the preceding claims, characterizing that said initial frequency band (37) is between 2 and 30 MHz.

7. Method according to any one the preceding claims, **characterized in that** said predetermined frequencyband is between 32 and 64 MHz.

8. Method of transmitting a digital signal in an initial frequencyband, said digital signal being sampled at a sampling frequency from an analogue signal having a frequency spectrum comprising of at least one mirror frequency band, said mirror frequency band being an image of said initial frequency band with respect to at least one integer multiple of half said sampling frequency, said method comprising steps consisting of:
- filtering said analogue signal in a predetermined frequency band among said at least one mirror frequency band so as to generate a modified analogue signal having a spectrum in said predetermined frequency band;
- converting, by means of an analogue to digital converter, said modified analogue signal into a digital signal, so as to generate said digital signal in said initial frequency band, wherein the digital signal is base band;
- transmitting said digital signal.

9. Method according to claim 8, **characterized in that** it comprises a supplementary step of amplifying the modified analogue signal before conversion of the modified analogue signal into a digital signal.

10. Method according to claim 9, **characterized in that** it comprises a supplementary filtering step after the amplification step, said supplementary filtering step eliminating all the undesired signals.

11. Device for transmitting an analogue signal in a frequency band predetermined from an initial digital signal sampled at a sampling frequency, said devicecomprising;
- baseband transmission means (31);
- a digital to analogue converter (34);
- the transmission means being arranged to transmit the initial digital signal to the digital to analogue converter, said initial digital signal being baseband and having an initial spectrum in an initial frequency band,
- the digital to analogue converter (34) being able to convert said initial digital signal into an initial analogue signal having a spectrum comprising a plurality of mirror frequency bands, said mirror frequency bands being images of said initial frequency band with respect to integer multiples of half the sampling frequency,
- means (35) of modifying the initial analogue signal arranged so as to generate a modified analogue signal having a modified spectrum in said predetermined frequency band,
- means of transmitting the modified analogue signal in said predetermined frequency band,
wherein said modification means (35) comprise a filter arranged to select said predetermined frequency band from said plurality of mirror frequency bands.

12. Device accordingto claim 11, in which said initial frequency band (37) is between 2 and 30 MHz.

13. Device according to claim 1 or 12, **characterized in that** said converter for converting the digital signal into an analogue signal (34) comprisesan interpolation filter increasing the sampling frequency of the digital signal in order to convert it into an analogue signal.

14. Device according to any one of claims 11 to 13, **characterized in that** it also comprises an amplifier (36) for the analogue signal.

15. Device according to claim 14, **characterized in that** it comprises a supplementary filter for eliminating undesired signals generated by said amplifier.

16. Device for transmitting a digital signal in an initial frequency band, said digital signal being sampled at a sampling frequency from an analogue signal having a frequency spectrum comprising at least one mirror frequency band, said mirror frequency band being an image of said initial frequency band with respect to at least one integer multiple of half said sampling frequency, said device comprising:
- a filter (39) arranged to select said analogue signal in a frequency band predetermined among said at least one mirror frequency band so as to generate a modified analogue signal having a spectrum in said predetermined frequencyband;
- an analogue to digital converter (41) able to convert said analogue signal into a digital signal, so as to generate a digital signal in said initial frequency band, wherein the digital signal is baseband;
- means (31) of transmitting said digital signal.

17. Device according to claim 16, **characterized in that** it also comprises an amplifier (40) of the modified analoguesignal.

18. Device according to claim 17, **characterized in that** it comprises a supplementary filter for eliminating undesired signals generated by said amplifier.
